(19) Europäisches Patentamt
European Patent Office
Office européen des brevets

(11) Publication number : 0 461 886 A1

(12) **EUROPEAN PATENT APPLICATION**

(21) Application number : 91305321.1

(51) Int. Cl.$^5$ : B01J 2/30

(22) Date of filing : 12.06.91

(30) Priority : 12.06.90 JP 151590/90

(43) Date of publication of application :
18.12.91 Bulletin 91/51

(84) Designated Contracting States :
AT BE CH DE DK ES FR GB GR IT LI LU NL SE

(71) Applicant : Tosoh Corporation
4560, Kaisei-cho
Shinnanyo-shi, Yamaguchi-ken 746 (JP)

(72) Inventor : Onaka, Tadao
17-11 Nagata-cho
Shinnanyo-shi, Yamaguchi-ken (JP)

(74) Representative : Kearney, Kevin David Nicholas et al
KILBURN & STRODE 30 John Street
London, WC1N 2DD (GB)

(54) **Method for preventing coagulation of powder.**

(57) A method for preventing coagulation of powder, characterized in that a water-soluble cellulose ester is incorporated as an anticoagulant to the powder.

EP 0 461 886 A1

The present invention relates to a method for preventing coagulation of powder which is likely to be coagulated. More particularly, it relates to a method for preventing coagulation of powder by using a water-soluble cellulose ester as an anticoagulant.

A powder of an amine such as piperazine or triethylenediamine (hereinafter referred to simply as TEDA) is a compound which usually has coherence and adherence and thus is likely to be coagulated. Not to mention such a specific powder, a highly hydroscopic powder or a highly sublimable powder in general usually readily undergoes coagulation due to an inclusion of a small amount of moisture or due to an increase of the temperature. Therefore, such a coagulable powder is required to be handled with due care, and once such a powder has coagulated, the handling tends to be extremely difficult. As measures to prevent coagulation of such a coagulable powder, it is common to employ a method of removing impurities contained in the powder and enlarging the particle size of the powder itself, a method of adding an anticoagulant to the powder or a method of storing the powder by means of a closed vessel. However, among coagulable powders, there is one which undergoes coagulation even when stored in a closed vessel, such as piperazine, or a highly sublimable substance such as TEDA which tends more likely to be coagulated when the purity is increased. Therefore, there has been no appropriate method for preventing coagulation of such a powder. Further, such a powder has extremely high coagulability, and it is usually difficult to prevent the coagulation by enlarging the particle size. As a method for preventing coagulation of such a highly coagulable powder, it is usually believed to be effective to incorporate a suitable anticoagulant.

For the selection of such an anticoagulant, it is desired to select an anticoagulant which is capable of effectively accomplishing the object in an amount as small as possible and which does not impart an odor or a color to the powder by the addition. Further, it is desired to select an anticoagulant which presents no adverse effects to the physical properties of the powder in connection with the purpose of the powder and which is inexpensive. As conventional anticoagulants, silica powder (Japanese Unexamined Patent Publication No. 203039/1982) and polyethylene glycols (Japanese Examined Patent Publication No. 46758/1988) are known. However, the silica powder is effective only to temporarily avoid the contact of crystals to one another and its anti-coagulating action is very weak. On the other hand, liquid anticoagulants such as polyethylene glycols may simply be mixed with TEDA powder. As a consequence, however, the TEDA powder tends to be wet, and in a long range storage, the liquid tends to flow to the bottom of the container and tends to be non-uniform in the container, whereby the anti-coagulating action tends to be low. Further, in either case, the anticoagulant is required to be added at a relatively high concentration, whereby the purity of TEDA will be low.

Whereas, Japanese Examined Patent Publications No. 62241/1988 and No. 3142/1989 disclose that by an addition of a TEDA polymer (ethylene-piperazine copolymer) as an additive during a precipitation step, it is possible to simplify the process of the addition so that the process control can be easy, and the TEDA polymer exhibits a high level of anti-coagulating action, whereby adequate effects can be obtained by an addition of a very small amount of the polymer. However, this TEDA polymer is insoluble in most organic solvents.

Powders usually have coherence and adherence in many cases. It is common to employ an operation such as granulation or classification to reduce such nature. However, in a case of a coagulable powder such as a highly sublimable powder of e.g. TEDA, sublimation and condensation are repeated due to a change of e.g. the external temperature, whereby a strong bridge will be formed between powder particles (crystals). Thus, TEDA tends to be coagulated entirely in the container and tends to be hardly disintegrated.

TEDA is usually synthesized or produced from e.g. N-aminoethylpiperazine or hydroxyethylpiperazine. By such a method, TEDA is obtainable as slightly yellow white crystals. As a by-product, an alkylpiperazine or the like is contained. This by-product has an anti-coagulating action to some extent. However, TEDA crystals of high purity have been desired in recent years, and consequently, TEDA crystals having a purity of at least 99.9% are now produced as a result of an improvement in the purification technique. Accordingly, the coagulability of TEDA has been thereby sharply increased, and there has been a problem from the viewpoint of the production process or the storage.

It is an object of the present invention to provide a method for preventing coagulation of powder having coagulability, whereby prevention of coagulation can effectively be conducted by adding a small amount of an anticoagulant which is excellent in the solubility to various solvents and which is inexpensive and has no adverse effect to the physical properties of the powder, as compared with the conventional methods.

As a result of an extensive study in view of the above-mentioned circumstances, the present inventors have found it possible to effectively control coagulation of powder by using a water-soluble cellulose ester as an anticoagulant, and have arrived at the present invention on the basis of this discovery.

Thus, the present invention provides a method for preventing coagulation of coagulable powder, which comprises incorporating to the powder a water-soluble cellulose ester alone or in combination with other anticoagulant, to control the coagulability.

Now, the present invention will be described in detail with reference to the preferred embodiments.

In the present invention, the coagulable powder means a highly hygroscopic and/or sublimable powder of e.g. piperazine, TEDA, ammonium sulfate, ammonium chloride or sodium chloride.

Two types of causes are conceivable as the main causes for coagulation of powder i.e. coagulation due to absorption of moisture and coagulation due to bridging of powder particles (crystals) by sublimation and condensation. The former can be avoided by packaging. Otherwise it can be avoided by improving the quality control of the product. With respect to the latter, there has been no effective method discovered which presents no adverse effects to the physical properties of the powder and which fully satisfies other conditions. The present invention presents a very effective coagulation-preventing method by incorporating an anticoagulant which prevents absorption of moisture and the sublimation and condensation action.

The mechanism for preventing coagulation in the present invention is considered to be as follows. Water-soluble cellulose esters exhibit excellent solubility to various solvents and they are capable of forming transparent strong films from their solutions in water or in organic solvents. A solution of such a water-soluble cellulose ester in water or in an organic solvent is mixed to the powder, followed by drying to form a film on the surface of the powder and thereby to microcapsulate the crystals, so that the contact of the crystal-forming component with outer atmosphere or the contact of crystals to one another is prevented, whereby the absorption of moisture and the sublimation and condensation, are suppressed. Thus, coagulation of crystals to one another is suppressed, and coagulation-preventing effects can be obtained.

The water-soluble cellulose ester in the present invention may, for example, be a compound of the following formula (1):

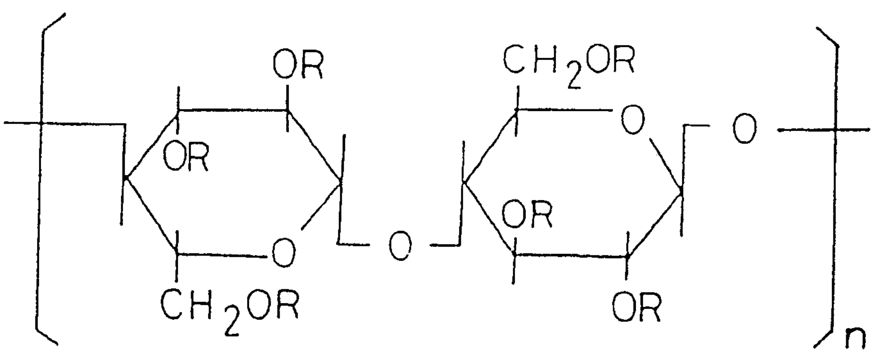

(1)

wherein n is an integer of at least 1, and R is H or a branched or linear $C_1$-$C_{10}$ alkyl group or $\{CH_2\text{-}CH(OH)CH_3\text{-}O\}_m H$, wherein m is an integer of at least 1.

Specifically, methyl cellulose, ethyl cellulose, hydroxypropylmethyl cellulose or propyl cellulose may be mentioned. Among them, particularly preferred is hydroxypropylmethyl cellulose and propyl cellulose. A product having the hydroxyl group in the cellulose residue substituted by a methoxy group, a hydroxylpropoxy group or both of them, is commercially available as Metlose (manufactured by Shinetsu Chemical Co., Ltd.) or Nisso HPC (manufactured by Nippon Soda Co., Ltd.).

Such water-soluble cellulose esters are available with a wide range of molecular weights ranging from a low molecular weight of 10,000 to an average molecular weight exceeding 100,000, and the viscosities of their solutions are proportional to the average molecular weights. Selection of a particular water-soluble cellulose ester among such various water-soluble cellulose esters depends on the properties required. However, hydroxypropyl cellulose or hydroxypropylmethyl cellulose is preferred in a case where it is used as dissolved in a wide range of organic solvents when the powder is to be used. The average molecular weight of the water-soluble cellulose ester to be used may be at any level. However, if the molecular weight is too high, the viscosity of the solution tends to be high, whereby the dissolving method and handling tend to be difficult. Preferably, the water-soluble cellulose ester has an average molecular weight of from 10,000 to 100,000.

According to the present invention, there is no particular restriction as to the method for adding a water-soluble cellulose ester to the powder. For example, it is common to employ a method wherein after the preparation of powder, the powder and a solution of the water-soluble cellulose ester in water or in an organic solvent are thoroughly mixed by means of a mixing apparatus such as a ribbon blender or a V-type mixer. However, to employ such a mixing apparatus, the process tends to be complex, and the cost is expected to be substantial. Whereas, if a solution of the water-soluble cellulose ester in water or in an organic solvent is sprayed or otherwise added during the liquid removal step immediately after precipitation i.e. to a TEDA crystal cake in a centrifugal separator, followed by drying, it is possible to effectively and uniformly accomplish the coating on the TEDA crystal surface without requiring any mixing apparatus. Otherwise, it may be added during the precipitation step, as disclosed in Japanese Examined Patent Publication No. 62241/1988.

Anticoagulants presently used are silica powders and polyethylene glycols. The anticoagulating ability of such conventional additives is relatively low, and when the coagulable powder is TEDA, such conventional additives are required in an amount of about 1 part by weight per 100 parts by weight of TEDA. Whereas, according to the present invention, the water-soluble cellulose ester is capable of forming a thin strong film, and a sufficient anti-coagulating action can be obtained when the water-soluble cellulose ester is contained in an amount of at least 0.001 part by weight relative to 100 parts by weight of TEDA. The larger the amount, the higher the anti-coagulating effects. However, the purity of the powder decreases as the amount of the additive to the powder increases. Therefore, the amount of addition should preferably be as small as possible. According to the present invention, the amount of the water-soluble cellulose ester added to powder is preferably from 0.001 to 2 parts by weight, more preferably from 0.01 to 0.1 part by weight, per 100 parts by weight of the powder. This amount corresponds to from 1/10 to 1/100 of the amount of the conventional additives.

Further, the water-soluble cellulose esters are colorless and transparent and chemically very stable, and they are not substantially decomposed by acids or alkalis. Therefore, they do not adversely affect the physical properties of the powder, and they show excellent solubility to various solvents and thus have excellent properties as additives or coating agents.

As described in the foregoing, the present invention provides an epoch-making coagulation-preventing technique in which a very small amount of a water-soluble cellulose ester is added to powder to coat it on the powder surface to impart excellent coagulation-preventing effects by suppressing moisture absorption and sublimation of the powder and preventing the contact of the powder particles to one another.

Now, the present invention will be described in further detail with reference to Examples. However, it should be understood that the present invention is by no means restricted by such specific Examples.

EXAMPLE 1

For the test to study coagulability, TEDA powder having a purity of at least 99.95% was used, and as an anticoagulant, methyl cellulose was used.

500 g of a TEDA cake was prepared on a Buechner funnel, and 200 ml of a 0.5% alcohol solution of the above anticoagulant was added thereto. The mixture was thoroughly mixed to contact the solution with TEDA crystals, followed by filtration to collect the TEDA crystals. The crystals were thoroughly dried under vacuum to obtain 350 g of a sample. The quantitative analysis of the coated water-soluble cellulose ester was conduced in accordance with Japanese Pharmacopea. As a result, the coated amount was 0.05 g.

The measurement of the coagulation degree and the evaluation standards were as follows. Namely, the obtained sample was packed in a container having a size of 5 cm x 5 cm and a height of 2 cm, and a plastic plate of 5 cm x 5 cm was placed thereon. A weight of 300 g was placed thereon, and the container was stored in a desiccater having a humidity of not higher than 1%. During the storage, the pressure exerted to the crystals was 12 g/cm$^2$. After the storage in the desiccater for one month, the weight and the container were removed, and a pressure was exerted to the center portion of the crystal block having the plastic plate located beneath, by a Kiya-type hardness meter, whereby the pressure at breakage was read. The values thus obtained were classified into the following three rankings, which were used as indices for evaluation of the coagulation degree. In the following Examples and Comparative Examples, the coagulation degree was evaluated in the same manner. The results are shown in Table 1.

As is evident from Table 1, TEDA treated in this Example belongs to A rank, thus indicating excellent anti-coagulating effects.

A rank: Crystal block which can readily be broken with a slight impact with a breaking pressure of not higher than 1.0 kg/cm$^2$ and in which no substantial progress of coagulation was observed.

B rank: Crystal block with a breaking pressure of not higher than 10.0 kg/cm$^2$ which can not be broken by a low level of impact and in which coagulation was found progressed entirely.

C rank: Crystal block which requires a considerably strong impact for breakage with a breaking pressure of at least 10.0 kg/cm$^2$ and in which coagulation was found completely progressed.

EXAMPLE 2

The operation was conducted in the same manner as in Example 1 except that as the anticoagulant, hydroxypropylmethyl cellulose was used instead of methyl cellulose. The coated amount was 0.05 g/340 g.

The results are shown in Table 1.

## EXAMPLE 3

The operation was conducted in the same manner as in Example 1 except that as the anticoagulant, hydroxypropyl cellulose was used instead of methyl cellulose. The coated amount was 0.06 g/350 g.
The results are shown in Table 1.

## COMPARATIVE EXAMPLE 1

The operation was conducted in the same manner as in Example 1 except that no anticoagulant was used.
The results are shown in Table 1.

## COMPARATIVE EXAMPLE 2

3,000 ml of a TEDA methanol solution having a composition comprising 50 parts by weight of TEDA and 50 parts by weight of methanol, was introduced into a flask having an internal capacity of 5,000 ml, and 0.15 g of TEDA polymer (ethylene-piperazine copolymer prepared by the synthesis disclosed in Japanese Unexamined Patent Publication No. 62241/1988), was added thereto. The mixture was subjected to methanol removal by an evaporator, whereby 1,100 ml of methanol was distilled. The residual liquid was left to stand still at a room temperature and then cooled to a liquid temperature of 20°C. Precipitated TEDA crystals were collected by filtration under suction with a filter paper of No. 5C and then dried under vacuum to obtain 450 g of TEDA crystals. The TEDA polymer contained in the TEDA crystals was 0.05 g. With respect to this sample, the coagulation degree was evaluated in the same manner as in Example 1.
The results are shown in Table 1. As is evident from Table 1, excellent coagulation-preventing effects were exhibited, but when made into a 33 wt% dipropylene glycol solution, a certain level of turbidity was observed.

## COMPARATIVE EXAMPLE 3

500 g of TEDA and 2 g of silica gel (manufactured by Nippon Silica Gel Kogyo K.K., bulk density: 40g/ℓ, average particle size: 2 μm) were thoroughly mixed by a V-mixer, and the obtained mixture was used as a sample. Otherwise, the operation was conducted in the same manner as in Example 1. The results are as shown in Table 1, and a certain degree of coagulation was observed.

## COMPARATIVE EXAMPLE 4

500 g of TEDA and polyethylene glycol #200 (manufactured by Kanto Kagaku) were thoroughly mixed by a V-type mixer, and the mixture was used a sample. Otherwise, the operation was conducted in the same manner as in Example 1. The results are shown in Table 1.

## EXAMPLE 4

Using hydroxypropylmethyl cellulose as the anticoagulant, 500 g of TEDA and 50 ml of a 0.5% methanol solution of hydroxymethyl cellulose were thoroughly mixed by a V-type mixer and then dried in a vacuum drier. The added amount was 0.1 g. The results are shown in Table 1.

Table 1

| | Additive | Amount of TEDA (g) | Treating method | Amount added (g) | Coagulation-preventing action | Others |
|---|---|---|---|---|---|---|
| Example 1 | Methyl cellulose | 350 | Coating | 0.05 | A | |
| Example 2 | Hydroxypropylmethyl cellulose | 340 | Coating | 0.05 | A | |
| Example 3 | Hydroxypropyl cellulose | 350 | Coating | 0.06 | A | |
| Example 4 | Hydroxypropyl cellulose | 500 | Mixing | 0.25 | A | |
| Comparative Example 1 | Nil | 310 | - | - | C | Coagulation advanced very much |
| Comparative Example 2 | Polymer TEDA | 450 | Precipitation | 0.05 | A | Slight turbidity observbed when dissolved |
| Comparative Example 3 | Silica powder | 500 | Precipitation | 2 | B | |
| Comparative Example 4 | Polyethylene glycol | 500 | Precipitation | 5 | B | Crystals being wet |

EXAMPLE 5

Using hydroxypropyl cellulose (Nisso HPC), the coated amount and the coagulation-preventing effects were compared. The operation was conducted in the same manner as in Example 1 except that instead of the alcohol solution of methyl cellulose, (1) 2%, (2) 1%, (3) 0.5%, (4) 0.1% or (5) 0.05% alcohol solution of hydroxypropyl cellulose, or (6) pure alcohol was used.

The amount of TEDA, the coated amount of hydroxypropyl cellulose and the coagulation preventing action are shown in Table 2. As is evident from Table 2, a certain degree of coagulation preventing action was observed even at a coated amount of 10 ppm, and excellent coagulation-preventing action was observed at a concentration of 100 ppm or higher. Further, no formation of turbidity or flowing substance was observed in solutions of various solvents such as alcohols, water and glycols.

Table 2

| | Concentration of the additive in the solution (%) | Amount of TEDA (g) | Coated amount (g) | Coagulation-preventing action |
|---|---|---|---|---|
| Example 5 (1) | 2 | 360 | 0.25 | A |
| (2) | 1 | 340 | 0.12 | A |
| (3) | 0.5 | 350 | 0.06 | A |
| (4) | 0.1 | 320 | 0.01 | B |
| (5) | 0.05 | 310 | 0.005 | B |
| (6) | 0 | 310 | 0 | C |

EXAMPLE 6 AND COMPARATIVE EXAMPLE 5

Into a flask having an internal capacity of 2,000 ml, 1,000 g of a methanol solution of piperazine having a composition comprising 40 parts by weight of piperazine and 60 parts by weight of methanol, was introduced, and 0.5 g of hydroxypropylmethyl cellulose was added thereto. The mixture was heated by a mantle heater, and heating was stopped when 300 ml of methanol was distilled off. The flask was immersed in a water bath and cooled until the liquid temperature became 20°C. Precipitated piperazine was collected by filtration under suction with a filter paper of No. 5C and washed with a small amount of methanol. The product was dried under vacuum to obtain 90 g of piperazine. Here, hydroxypropylmethyl cellulose contained in the piperazine was 0.02 g. This sample was subjected to evaluation of coagulation degree in the same manner as in Example 1. As a result, the coagulation degree was found to be A rank.

Whereas, in a case where the same operation was conducted without addition of hdyroxypropylmethyl cellulose, coagulation was found progressed to the interior, and the coagulation degree was found to be C rank.

EXAMPLE 7 AND COMPARATIVE EXAMPLE 6

Into a flask having an internal capacity of 2,000 ml, 1,000 g of an aqueous ammonium chloride solution having a composition comprising 35 parts by weight of ammonium chloride and 65 parts by weight of water, was introduced, and 0.5 g of hydroxypropyl cellulose was added thereto. The mixture was heated by a mantle heater, and heating was stopped when 300 ml of water was distilled off. The flask was immersed in a water bath and cooled until the liquid temperature became 20°C. Precipitated ammonium chloride was collected by filtration under suction with a filter paper of No. 5C and washed with a small amount of pure water. The product was dried under vacuum to obtain 95 g of ammonium chloride. Here, hydroxypropyl cellulose contained in the crystals was 0.025 g. This sample was subjected to evaluation of the coagulation degree in the same manner as in Example 1. As a result, the coagulation degree was found to be A rank.

Whereas, in a case where the same operation was conducted without adding hydroxypropyl cellulose, coagulation was found progressed to the interior, and the coagulation degree was found to be C rank.

EXAMPLE 8 AND COMPARATIVE EXAMPLE 7

Into a flask having an internal capacity of 2,000 ml, 1,000 g of an aqueous ammonium sulfate solution having a composition comprising 40 parts by weight of ammonium sulfate and 60 parts by weight of water, was introduced, and 0.5 g of hydroxypropylmethyl cellulose was added thereto. The mixture was heated by a mantle heater, and heating was stopped when 400 ml of water was distilled off. The flask was immersed in a water bath and cooled until the liquid temperature became 20°C. Precipitated ammonium sulfate was collected by filtration under suction with a filter paper of No. 5C and washed with a small amount of pure water. The product was dried under vacuum to obtain 240 g of ammonium sulfate. Here, hydroxypropylmethyl cellulose contained in the ammonium sulfate was 0.07 g. This sample was subjected to evaluation of coagulation degree in the same manner as in Example 1. As a result, the coagulation degree was found to be A rank.

Whereas, in a case where the same operation was conducted without adding hydroxypropylmethyl cellulose, the coagulation was found progressed to the interior, and the coagulation degree was found to be C rank.

In a broader aspect of the present invention a composition of matter comprises a particulate material, the said particles carrying water soluble cellulose ester such as to reduce the tendency of the said particles to stick to each other.

The invention is particularly useful when applied to materials where particles of the material have a marked tendency to stick together i.e. to agglomerate; such process is also referred to herein as coagulation. Materials which have a marked tendency for their particles to stick together include materials which are hygroscopic or which sublime.

## Claims

1. A composition of matter comprising particulate material, the said particles carrying water soluble cellulose ester such as to reduce the tendency of the said particles to stick to each other.

2. A method for preventing coagulation of powder, characterized in that a water-soluble cellulose ester is incorporated as an anticoagulant to the powder.

3. A method according to claim 2, characterized in that the said powder is a highly hygroscopic and/or sublimable powder of piperazine, triethylenediamine, amonium sulfate, ammonium chloride or sodium chloride.

4. A method according to claim 2 or claim 3, characterized in that the water-soluble cellulose ester is a compound of the formula:

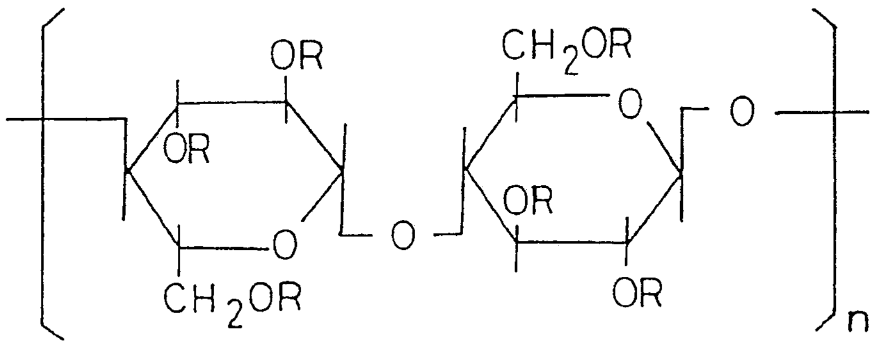

( 1 )

wherein n is an integer of at least 1, and R is H or a branched or linear $C_1$-$C_{10}$ alkyl group or $\{CH_2\text{-}CH(OH)CH_3\text{-}O\}_m H$, wherein m is an integer of at least 1.

5. A method according to claim 2, 3 or 4, characterized in that the water-soluble cellulose ester is methyl cellulose, ethyl cellulose, hydroxypropylmethyl cellulose or propyl cellulose.

6. A method according to claim 2, 3, 4 or 5 characterized in that the water-soluble cellulose ester has an average molecular weight of from 10,000 to 100,000.

7. A method according to any one of claims 2 to 6, characterized in that the water-soluble cellulose ester is incorporated in an amount of from 0.001 to 2 parts by weight per 100 parts by weight of the powder.

8. A method according to any one of claims 1 to 7, characterized in that the water-soluble cellulose ester is incorporated in an amount of from 0.01 to 0.1 part by weight per 100 parts by weight of the powder.

European Patent Office

# EUROPEAN SEARCH REPORT

Application Number

EP 91 30 5321

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 128 192 (ORGANON LABORATORIES LTD)<br>* Complete document *<br>----- | 1,2,5,7 | B 01 J 2/30 |
| | | | TECHNICAL FIELDS SEARCHED (Int. Cl.5) |
| | | | B 01 J |

The present search report has been drawn up for all claims

| Place of search | Date of completion of the search | Examiner |
|---|---|---|
| THE HAGUE | 02-08-1991 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)